# EUROPEAN PATENT SPECIFICATION

(11) **EP 4 181 358 B1**
(45) Date of publication and mention of the grant of the patent: **04.03.2026**
(21) Application number: 20958370.7
(22) Date of filing: 23.10.2020
(51) Int. Cl.: H02K 9/19, H02P 29/62, H01M 10/615, B60L 58/27, H02K 1/32, H02K 11/00, H02K 11/30, B60L 1/08, B60L 15/02, H02K 7/00, H01M 10/625, H01M 10/633, H01M 10/667, H02K 21/14

(54) **ELECTRIC MOTOR, ELECTRIC MOTOR CONTROLLER, HEAT EXCHANGE SYSTEM, AND CONTROL METHOD**
ELEKTROMOTOR, ELEKTROMOTORSTEUERGERÄT, WÄRMETAUSCHERSYSTEM UND STEUERUNGSVERFAHREN
MOTEUR ÉLECTRIQUE, DISPOSITIF DE COMMANDE DE MOTEUR ÉLECTRIQUE, SYSTÈME D'ÉCHANGE DE CHALEUR ET PROCÉDÉ DE COMMANDE

(43) Date of publication of application: 17.05.2023
(73) Proprietor: Huawei Digital Power Technologies Co., Ltd., Shenzhen, Guangdong 518043 (CN)
(72) Inventor: WU, Chaoqiang, Shenzhen, Guangdong 518129 (CN); SHI, Chaojie, Shenzhen, Guangdong 518129 (CN); ZHOU, Yuan, Shenzhen, Guangdong 518129 (CN); WANG, Shaofei, Shenzhen, Guangdong 518129 (CN); XIE, Xiaowei, Shenzhen, Guangdong 518129 (CN)
(74) Representative: Gill Jennings & Every LLP
(86) International application number: PCT/CN2020/123436
(87) International publication number: WO 2022/082788

(56) References cited:
- WO-A1-2019/072489
- WO-A1-2020/125770
- CN-A- 105 281 456
- CN-A- 110 022 034
- CN-A- 110 299 777
- CN-A- 111 347 928
- CN-A- 111 347 935
- CN-U- 208 401 714
- CN-U- 210 536 437
- US-A1- 2013 313 928
- US-A1- 2018 083 509
- US-A1- 2019 006 914

## Description

### TECHNICAL FIELD

This application relates to the field of motors, and in particular, to a motor, a motor controller, a heat exchange system, and a control method.

### BACKGROUND

With development of new energy vehicle technology and growing market, electric vehicles are increasingly favored by consumers. However, currently a battery of an electric vehicle is suitable to work in a specific temperature range, and an extremely low temperature greatly affects battery performance response. A lithium battery is used as an example.

(1) Activity of a positive electrode material of the battery decreases, a quantity of lithium ions moving inside a battery decreases, and a battery capacity decreases.

(2) Solidification of an electrolyte leads to deterioration of a diffusion and movement capability of charged ions in the positive and negative electrode materials of the battery, a decrease in electric energy transfer speed, and a decrease in battery discharge rate.

(3) The crystal lattice of the negative electrode material shrinks, the lithium ions are difficult to intercalate, and the charging speed decreases.

Therefore, the battery needs to be heated in a low-temperature environment to avoid the foregoing problems. Currently, a battery heating manner is to heat the battery by connecting a direct current to a winding of a motor stator, and using copper loss of the winding to heat the battery. However, in this manner, because the winding is relatively small, heating power is also small, and a heating speed is relatively slow.
US 2018/0083509 A1 discloses an electric motor. CN 111 347 928 A discloses a system comprising a motor in communication with a motor controller, the motor comprising a housing, a stator mounted inside the housing,
a rotor connected to the housing through a bearing, a winding wound on the stator, and a liquid inlet hole and a liquid outlet hole that are connected to a cavity in the housing, wherein the liquid inlet hole is used for inflow of an insulation coolant, and the liquid outlet hole is used for outflow of the insulation coolant; the rotor comprises a rotating shaft, wherein a fourth hole channel connected to the cavity is disposed on the stator, wherein insulation coolant flowing in the fourth hole channel is used to perform heat exchange with the stator; and the winding is configured to input a direct-axis alternating current; wherein the motor controller comprises an inverter circuit and a control apparatus, wherein the control apparatus is configured, in use, to control the inverter circuit to output a direct-axis alternating current to the winding if the temperature of a battery is less than a battery temperature threshold, otherwise the control apparatus controls the inverter circuit not to output the direct-axis alternating current to the winding.

### SUMMARY

The invention is set out in the appended set of claims. Embodiments of this application provide a system comprising a motor, a motor controller, a heat exchange system, so as to improve motor heating efficiency.

To achieve the foregoing objective, the following technical solutions are used in embodiments of this application.

According to the motor provided in application, a direct-axis alternating current is input into the winding of the motor, so that the rotating shaft and the rotor iron core of the rotor of the motor, and the stator generate heat due to an eddy current loss and a magnetic hysteresis loss, the permanent magnet of the rotor generates heat due to an eddy current loss, and the winding generates heat due to a copper loss. Therefore, compared with simply relying on the copper loss of the winding to generate heat, this application can provide higher heating power and heating efficiency, and speed up a heating speed.

According to the invention, a second hole channel connected to the cavity is disposed on the rotating shaft. An insulation coolant flowing in the second hole channel performs heat exchange with the rotating shaft.

According to the invention, the liquid inlet hole includes a first liquid inlet hole. The first liquid inlet hole is disposed on the rotating shaft, and is connected to a second hole channel. The insulation coolant can flow into the inside of the motor through the rotating shaft.

According to the invention, a third hole channel is further disposed between the rotating shaft and the rotor iron core, and the first hole channel is connected to the second hole channel through the third hole channel. The third hole channel is configured to connect the first hole channel to the second hole channel, so as to facilitate flow of the insulation coolant inside the motor.

According to the invention, a fourth hole channel connected to the cavity is disposed on the stator. An insulation coolant flowing in the fourth hole channel is used to perform heat exchange with the stator.

In a possible implementation, the liquid inlet hole includes a second liquid inlet hole, and the second liquid inlet hole is disposed at a position that is on the top of the housing and faces the winding. In this way, the insulation coolant flowing in from the second liquid inlet hole flows onto the winding under gravity, thereby performing heat exchange with the winding.

In a possible implementation, the liquid outlet hole is disposed at the bottom of the housing. In this way, the insulation coolant flows out of the motor from the liquid outlet hole under gravity.

According to the invention, the system includes a motor controller. The motor controller includes an inverter circuit and a control apparatus. The control apparatus is configured to control the inverter circuit to output a direct-axis alternating current to a winding of the motor according to any one of the first aspect and the implementations of the first aspect.

According to the motor controller provided in this embodiment of this application, a direct-axis alternating current is input into the winding of the motor, so that a rotating shaft and a rotor iron core of a rotor of the motor, and a stator generate heat due to an eddy current loss and a magnetic hysteresis loss, a permanent magnet of the rotor generates heat due to an eddy current loss, and the winding generates heat due to a copper loss. Therefore, compared with simply relying on the copper loss of the winding to generate heat, this application can provide higher heating power and heating efficiency, and speed up a heating speed.

According to the invention, the control apparatus is further configured to: if temperature of a battery is less than a battery temperature threshold, adjust a frequency of the direct-axis alternating current based on whether the battery is connected to an external charging power supply and an output voltage of the battery. This implementation provides a manner of adjusting the frequency of the direct-axis alternating current.

According to the invention, the control apparatus is specifically configured to: if the battery is connected to an external charging power supply, or if the battery is not connected to an external charging power supply and the output voltage of the battery is greater than a first voltage threshold, adjust the frequency of the direct-axis alternating current to a first frequency; or if the battery is not connected to an external charging power supply and the output voltage of the battery is less than or equal to the first voltage threshold but is greater than a second voltage threshold, adjust the frequency of the direct-axis alternating current to a second frequency. The first voltage threshold is greater than the second voltage threshold, a first current intensity is greater than a second current intensity, and the first frequency is greater than the second frequency. This implementation provides a manner of specifically adjusting the frequency of the direct-axis alternating current.

In a possible implementation, the control apparatus is further configured to: if the temperature of the battery is less than the battery temperature threshold, determine temperature of the rotor of the motor based on at least one of temperature of a housing of the motor, temperature of the winding, temperature of an insulation coolant flowing out of the motor, and ambient temperature; and adjust a current intensity of the direct-axis alternating current based on the temperature of the rotor. This implementation provides a manner of adjusting the current intensity of the direct-axis alternating current.

In a possible implementation, the control apparatus is specifically configured to: if the temperature of the rotor is greater than the first rotor temperature threshold, adjust the current intensity of the direct-axis alternating current to the first current intensity; or if the temperature of the rotor is less than the second rotor temperature threshold, adjust the current intensity of the direct-axis alternating current to the second current intensity; otherwise, maintain the current intensity of the direct-axis alternating current. The first rotor temperature threshold is greater than the second rotor temperature threshold, and the first current intensity is less than the second current intensity. This implementation provides a manner of specifically adjusting the current intensity of the direct-axis alternating current.

In a possible implementation, the control apparatus is further configured to: if the temperature of the rotor is greater than the first rotor temperature threshold, adjust the frequency of the direct-axis alternating current to the second frequency. The frequency of the direct-axis alternating current may be further adjusted based on the temperature of the rotor.

In a possible implementation, the control apparatus is further configured to output a quadrature-axis current to the winding. The motor may be heated while the motor is driven to rotate.

In a possible implemention, a heat exchange system is provided. The heat exchange system includes the motor according to any one of the first aspect and the implementations of the first aspect, the motor controller according to any one of the second aspect and the implementations of the second aspect, a heat exchanger, and a liquid pump. The liquid pump, the heat exchanger, and a liquid outlet hole and a liquid inlet hole of the motor are connected, and are configured to flow an insulation coolant. The motor controller is configured to output a direct-axis alternating current to a winding of the motor, and is further configured to control operation of the liquid pump.

According to a disclosure not forming part of the claimed invention ("disclosure" in the following), a control method is provided. The method includes: outputting a direct-axis alternating current to a winding of the motor according to any one of the first aspect and the implementations of the first aspect.

In a possible implementation, the method further includes: if temperature of a battery is less than a battery temperature threshold, adjusting a frequency of the direct-axis alternating current based on whether the battery is connected to an external charging power supply and an output voltage of the battery.

In a possible implementation, the adjusting a frequency of the direct-axis alternating current based on whether the battery is connected to an external charging power supply and an output voltage of the battery includes: if the battery is connected to an external charging power supply, or if the battery is not connected to an external charging power supply and the output voltage of the battery is greater than a first voltage threshold, adjusting the frequency of the direct-axis alternating current to a first frequency; or if the battery is not connected to an external charging power supply and the output voltage of the battery is less than or equal to a first voltage threshold but is greater than a second voltage threshold, adjusting the frequency of the direct-axis alternating current to a second frequency. The first voltage threshold is greater than the second voltage threshold, a first current intensity is greater than a second current intensity, and the first frequency is greater than the second frequency.

In a possible implementation, the method further includes: if the temperature of the battery is less than the battery temperature threshold, determining temperature of a rotor of the motor based on at least one of temperature of a housing of the motor, temperature of a winding, temperature of an insulation coolant flowing out of the motor, and ambient temperature; and adjusting a current intensity of the direct-axis alternating current based on the temperature of the rotor.

In a possible implementation, the adjusting a current intensity of the direct-axis alternating current based on the temperature of the rotor includes: if the temperature of the rotor is greater than a first rotor temperature threshold, adjusting the current intensity of the direct-axis alternating current to the first current intensity; or if the temperature of the rotor is less than a second rotor temperature threshold, adjusting the current intensity of the direct-axis alternating current to the second current intensity; otherwise, maintaining the current intensity of the direct-axis alternating current. The first rotor temperature threshold is greater than the second rotor temperature threshold, and the first current intensity is less than the second current intensity.

In a possible implementation, the method further includes: if the temperature of the rotor is greater than the first rotor temperature threshold, adjusting the frequency of the direct-axis alternating current to the second frequency.

In a possible implementation, the method further includes: outputting a quadrature-axis current to the winding.

According to another disclosure, a computer-readable storage medium is provided. The computer-readable storage medium stores a computer program. When the computer program runs on a computer or a processor, the computer or the processor performs the method according to any one of the fourth aspect and the implementations of the fourth aspect.

According to another disclosure, a computer program product including instructions is provided. When the instructions are run on a computer or a processor, the computer or the processor is enabled to perform the method according to any one of the said disclosure and the possible implementations thereof.

For technical effects of the said disclosures, refer to content of the first aspect. Details are not described herein again.

### BRIEF DESCRIPTION OF DRAWINGS

FIG. 1 is a schematic diagram of a direct axis and a quadrature axis according to an embodiment of this application;
FIG. 2 is a schematic diagram in which a current value Id of a direct-axis alternating current changes alternately between positive and negative according to an embodiment of this application;
FIG. 3 is a schematic diagram of an architecture of a heat exchange system according to an embodiment of this application;
FIG. 4 is a schematic flowchart of heating a battery by using a motor according to an embodiment of this application;
FIG. 5 is a schematic diagram of a structure of a motor according to an embodiment of this application;
FIG. 6 is a schematic diagram of a structure of a rotor of a motor according to an embodiment of this application;
FIG. 7 is a schematic flowchart 1 of a control method according to an embodiment of this application;
FIG. 8 is a schematic flowchart 2 of a control method according to an embodiment of this application;
FIG. 9A and FIG. 9B are a schematic flowchart 3 of a control method according to an embodiment of this application;
FIG. 10A and FIG. 10B are a schematic flowchart 4 of a control method according to an embodiment of this application; and
FIG. 11 is a schematic diagram of a relationship between a current intensity and a frequency of a direct-axis alternating current in a coordinate system established based on temperature of a rotor and an output voltage of a battery according to an embodiment of the application.

### DESCRIPTION OF EMBODIMENTS

The concepts involved in embodiments of this application are first described.

A motor involved in embodiments of this application is a permanent magnet motor.

U/V/W three-phase coordinate axis: Currently, a motor of an electric vehicle is usually an alternating current motor, and a battery is a direct current source. Therefore, a direct current output by the battery is converted into a three-phase alternating current of the motor by using an inverter. Coordinate axes of the three-phase alternating current are respectively a U-axis, a V-axis, and a W-axis.

A direct axis (direct axis) is also referred to as a D-axis or a d-axis, and is a time-varying direct current coordinate axis obtained by performing Park transformation (Park Transformation) on a stationary U/V/W three-phase coordinate axis.

A quadrature axis (quadrature axis) is also referred to as a Q-axis or a q-axis, and is a time-varying alternating current coordinate axis obtained by performing Park transformation on a stationary U/V/W three-phase coordinate axis.

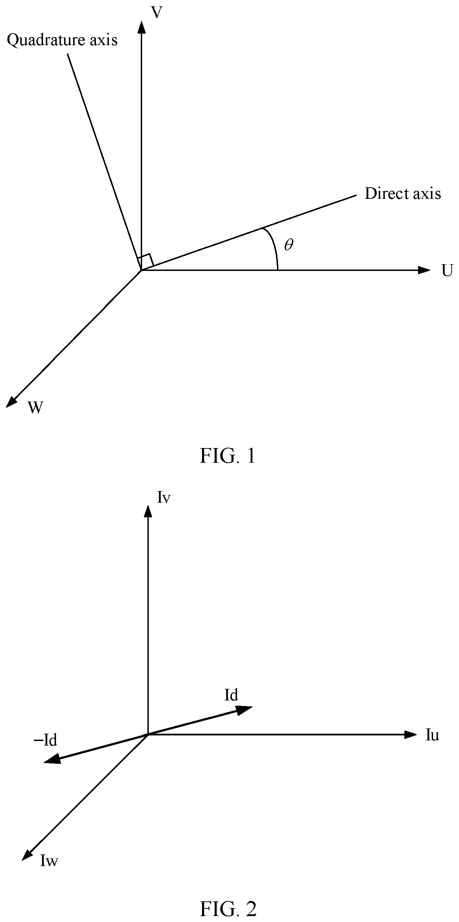

As shown in FIG. 1, a direct axis is perpendicular to a quadrature axis, and an angle *θ* between the direct axis and the U-axis is time-varying, and satisfies *θ = ωt,* where *ω* is an electrical frequency and *t* is a time.

Park transformation is used to convert an analysis manner of a U/V/W three-phase alternating current motor into an analysis manner of a direct axis and a quadrature axis of a direct current motor, so as to implement electromagnetic field decoupling control of the three-phase alternating current motor.

Winding is a coil wound on a stator iron tooth of a motor, and is configured to provide a path for a current, and a part extending out of a rotor iron core at both ends in an axial direction of a rotating shaft of the motor is referred to as an end winding. A material of the winding is usually copper.

Copper loss is a loss caused by a current flowing through a copper conductor.

Loss of a rotor iron core is a loss of a rotor iron core in an alternating magnetic field, and includes an eddy current loss caused by an induced eddy current and a magnetic hysteresis loss caused by a magnetic hysteresis effect. Similarly, a rotating shaft of a rotor and a stator also produce an eddy current loss and a magnetic hysteresis loss in the alternating magnetic field. The foregoing losses all cause heat, but the rotating shaft of the rotor and the stator generate less heat, while the rotor iron core generates more heat.

Eddy current loss of a permanent magnet: A permanent magnet generates an eddy current in an alternating magnetic field, and then causes a corresponding eddy current loss.

Pulsating magnetic field: A magnetic field has a fixed position in space and only its magnetic field intensity amplitude changes alternately with time.

Currently, in the field of electric vehicles, there are a plurality of battery heating manners. In a first battery heating manner, a direct current is connected to a winding of a motor stator, so that the winding generates heat due to a copper loss, and a coolant conducts heat of the motor to a heat exchanger, and the heat exchanger heats the battery. This manner has the following disadvantages:

(1) Only the copper loss of the winding of the motor is used to generate heat. Because resistance of the winding of the motor is relatively small, heating power is also small, and a heating speed is relatively slow.

(2) In the motor, only the winding generates heat, but other parts of the motor do not participate in heating generation. Therefore, heating generation of the motor is uneven, which may cause local overheating of the winding and affect a life of the winding.

(3) Temperature of the winding rises quickly, and overheating protection is triggered after a specific temperature is reached. Therefore, the heating duration is very short.

(4) Because the motor is an alternating current motor, the motor cannot operate when a direct current is connected. Therefore, the battery cannot be heated during operation of the motor (for example, when a vehicle runs).

In a second battery heating manner, a neutral point is led out of a three-phase winding of the motor, and is connected to an energy storage apparatus. In a heating mode, the battery charges the winding of the motor and the energy storage apparatus through an inverter, and then the winding of the motor and the energy storage apparatus discharge to the battery through a same loop. The two processes are alternately performed. The current in the foregoing process flows through the three-phase winding and then flows through the energy storage apparatus through the neutral point. Therefore, the current is a zero sequence current, that is, waveforms and phases of currents that pass through the three-phase winding are the same. This technology also uses the copper loss of the winding to generate heat.

In this manner, a neutral point needs to be led out of the motor winding to be connected to the energy storage apparatus, thereby increasing equipment costs. When only the copper loss of the winding is used to generate heat, the heating power is small, and the heating speed is relatively slow. In addition, this manner conflicts with normal operation of the motor, and the battery cannot be heated during operation of the motor (for example, when a vehicle runs).

A third battery heating manner is to heat the battery by using an external heater. However, in this manner, a battery heater is added, and equipment costs are increased.

A fourth battery heating manner is to heat the battery by using an external heating film. The heating film is composed of a plurality of high-temperature-resistant organic materials, polymer materials, carbon, and high-temperature-resistant fibers. Similarly, because the heating film is expensive, whose costs are far higher than that of the heater. In addition, an additional control circuit needs to be added, thereby increasing equipment costs.

An embodiment of this application provides a battery heating manner. Instead of a currently commonly used direct-axis direct current, a direct-axis alternating current is input to a winding. As shown in FIG. 2, a current value Id of the direct-axis alternating current changes alternately between positive and negative, so that the winding generates a magnetic field. A direction of the magnetic field remains unchanged, and only an amplitude changes alternately between positive and negative. The magnetic field is a pulsating magnetic field.

The magnetic field causes a rotating shaft of a rotor of a motor, a rotor iron core, and a stator to generate heat due to an eddy current loss and a magnetic hysteresis loss, a permanent magnet of the rotor generates heat due to an eddy current loss, and the winding generates heat due to a copper loss. Therefore, compared with simply relying on the copper loss of the winding to generate heat, the manner provided in this embodiment of this application may provide higher heating power and speed up a heating speed.

In addition, the battery heating manner provided in this embodiment of this application does not require another apparatus or increase additional costs. The winding, the stator, the rotating shaft of the rotor, the rotor iron core, and the permanent magnet all generate heat, so as to prevent the motor from generating heat unevenly and damaging the motor. Heat sources are dispersed, so that the motor generates heat more evenly. With same heating power, the motor can generate heat more persistently, or can have a higher heating power under a same overheating protection limit. In addition, in normal operation of the motor, a quadrature-axis current is input to the motor to drive rotation of the rotor of the motor, and in addition, the direct-axis alternating current is input to the motor to generate heat, so that the battery can be heated during operation of the motor (for example, when a vehicle runs).

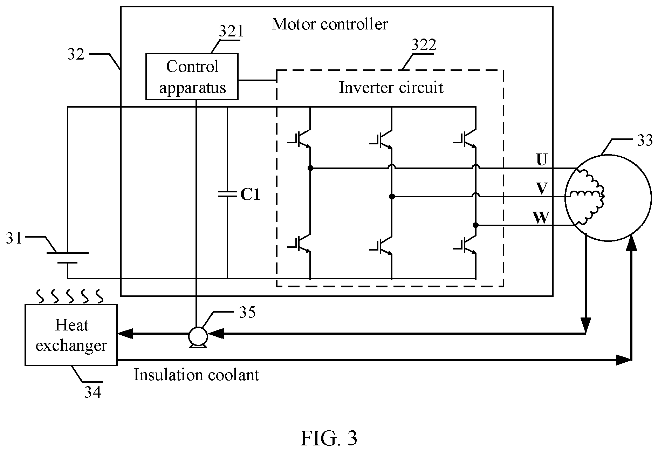

FIG. 3 is a schematic diagram of a heat exchange system according to an embodiment of this application. The heat exchange system includes a battery 31, a motor controller 32, a motor 33, a heat exchanger 34, and a liquid pump 35. The battery 31 is coupled to the motor controller 32 through a high-voltage direct current bus, and the motor controller 32 is coupled to the motor 33 through a three-phase line. The motor 33, the heat exchanger 34, and the liquid pump 35 are coupled to each other through a pipeline, and an insulation coolant flows in the pipeline. The insulation coolant may include mineral insulation oil, synthetic insulation oil, vegetable oil, or the like.

The battery 31 is configured to output a direct current, and includes, for example, a storage battery, a lithium battery, a fuel cell, a supercapacitor, or the like.

The motor controller 32 is also referred to as a motor control unit (motor control unit, MCU), and includes a control apparatus 321 and an inverter circuit 322. The control apparatus 321 is configured to control the inverter circuit 322 to output a three-phase (U/V/W) current (for example, a direct-axis alternating current) to the motor 33, and control the stop and operation of the liquid pump 35. In the figure, the inverter circuit 322 is an example of a three-phase full-bridge inverter circuit, or may be another inverter circuit. This is not limited in this application.

The motor 33 is a three-phase alternating current motor. An insulation coolant flows in the motor 33, and when the motor 33 generates heat, it transfers the heat to the insulation coolant.

The heat exchanger 34 is disposed around the battery 31, and is configured to perform heat exchange with the battery 31. An insulation coolant flows in the heat exchanger 34.

The liquid pump 35 is configured to drive the insulation coolant to flow between the heat exchanger 34 and the motor 33. When the liquid pump 35 is powered on, it also generates heat and heats the insulation coolant, thereby improving heating efficiency.

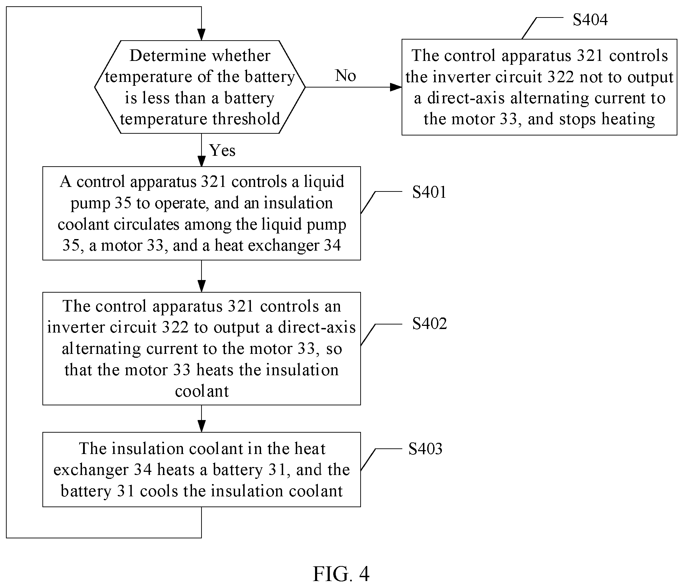

As shown in FIG. 4, a procedure of heating a battery by using a motor includes S401 to S404. If temperature of the battery is less than a battery temperature threshold, steps S401 to S403 are performed. Otherwise, step S404 is performed:

S401: If the temperature of the battery is less than the battery temperature threshold, a control apparatus 321 controls a liquid pump 35 to operate, and an insulation coolant circulates among a liquid pump 35, a motor 33, and a heat exchanger 34.

S402: The control apparatus 321 controls an inverter circuit 322 to output a direct-axis alternating current to the motor 33, so that the motor 33 heats the insulation coolant.

S403: The insulation coolant in the heat exchanger 34 heats a battery 31, and the battery 31 cools the insulation coolant.

S404: If the temperature of the battery is greater than or equal to the battery temperature threshold, the control apparatus 321 controls the inverter circuit 322 not to output the direct-axis alternating current to the motor 33, and stops heating.

It should be noted that the foregoing process may be repeatedly performed at a time interval, and the temperature of the battery does not need to be frequently detected.

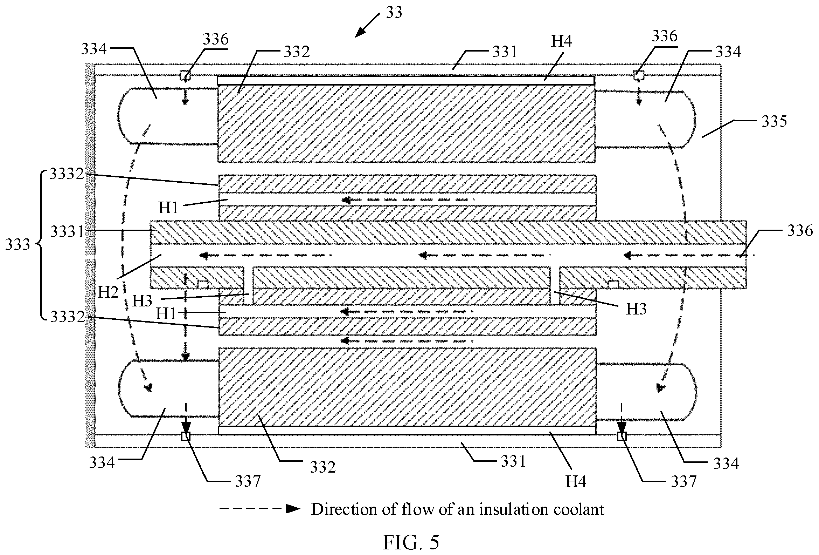

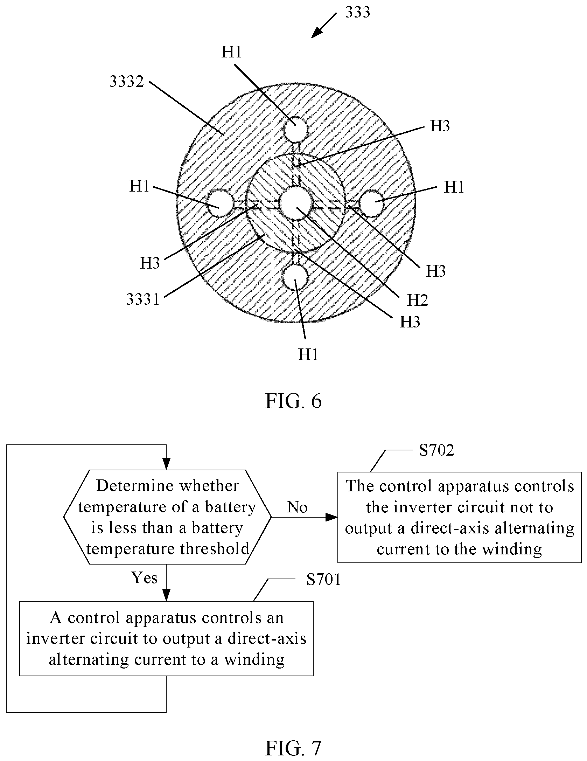

The following describes a structure of the motor 33 with reference to FIG. 5 and FIG. 6.

As shown in FIG. 5, the motor 33 includes a housing 331, a stator 332 mounted inside the housing 331, a rotor 333 connected to the housing 331 through a bearing, a winding 334 wound on the stator 332, and a liquid inlet hole 336 and a liquid outlet hole 337 that are connected to a cavity 335 in the housing 331.

As shown in FIG. 5 and FIG. 6, the rotor 333 includes a rotating shaft 3331, a rotor iron core 3332 mounted around the rotating shaft 3331, and a permanent magnet (not shown in the figures) mounted on the rotor iron core 3332.

The permanent magnet is configured to generate an excitation magnetic field, and the permanent magnet may include stacked magnetic steel sheets and magnetic tiles, and the like. The rotor iron core 3332 includes soft magnetic materials such as a silicon steel sheet.

Optionally, a first hole channel H1 connected to the cavity 335 is disposed on the rotor iron core 3332, a second hole channel H2 connected to the cavity 335 is disposed on the rotating shaft 3331, and a third hole channel H3 is further disposed between the rotating shaft 3331 and the rotor iron core 3332. The first hole channel H1 and the second hole channel H2 may be connected through the third hole channel H3, and a fourth hole channel H4 connected to the cavity 335 is disposed on the stator 332. The foregoing hole channels are configured to flow an insulation coolant. An insulation coolant flowing in the first hole channel H1 is used to perform heat exchange with the rotating shaft 3331, and an insulation coolant flowing in the second hole channel H2 is used to perform heat exchange with the rotor iron core 3332. The third hole channel H3 is configured to connect the first hole channel H1 to the second hole channel H2, so that the insulation coolant flows inside the motor. The stator 332 and the rotor iron core 3332 generate heat due to an eddy current loss and a magnetic hysteresis loss, and conduct heat for the winding 334. An insulation coolant flowing in the fourth hole channel H4 is used to perform heat exchange with the stator 332.

The first hole channel H1 and the second hole channel H2 may be parallel to a radial direction of the rotating shaft 3331, and the third hole channel H3 may be perpendicular to the radial direction of the rotating shaft 3331. The fourth hole channel may be parallel or perpendicular to the radial direction of the rotating shaft 3331.

Quantities of first hole channels H1, second hole channels H2, and third hole channels H3 are not limited in this application, that is, there may be one or more.

The liquid inlet hole 336 is used for inflow of an insulation coolant, and the liquid outlet hole 337 is used for outflow of an insulation coolant. A direction of flow of the insulation coolant in the figure is only an example.

According to the invention, the liquid inlet hole 336 includes a first liquid inlet hole. The first liquid inlet hole is disposed on the rotating shaft 3331, and is connected to the second hole channel H2, so that the insulation coolant can flow into the motor through the rotating shaft 3331.

In another possible implementation, the liquid inlet hole 336 includes a second liquid inlet hole. The second liquid inlet hole is disposed at a position that is on the top of the housing 331 and faces the winding 334, so that the insulation coolant flowing from the second liquid inlet hole flows to the winding 334 under gravity, thereby performing heat exchange with the winding 334.

In a possible implementation, the liquid outlet hole 337 may be disposed at the bottom of the housing 331, so that the insulation coolant flows out of the motor from the liquid outlet hole 337 under gravity.

With reference to a specific control method, the following describes how a control apparatus outputs a three-phase (U/V/W) current (for example, a direct-axis alternating current) to a motor by controlling an inverter circuit, so as to heat a battery. The control method may be applied to various states of an electric vehicle. For example, the states may be: the battery is connected to an external charging power supply, a key is moved to a self-check gear, a start button is pressed, keyless start is triggered, and the electric vehicle is traveling.

Specifically, as shown in FIG. 7, the control method includes S701 and S702.

S701: If temperature of a battery is less than a battery temperature threshold, the control apparatus controls the inverter circuit to output a direct-axis alternating current to a winding.

If the temperature of the battery is less than the battery temperature threshold, it indicates that the temperature of the battery is excessively low, which affects performance of the battery. Therefore, the control apparatus may control the inverter circuit to output the direct-axis alternating current to the winding to heat the battery.

In this application, a waveform of the direct-axis alternating current is not limited. For example, it may be a sine wave, a triangular wave, a sawtooth wave, or the like.

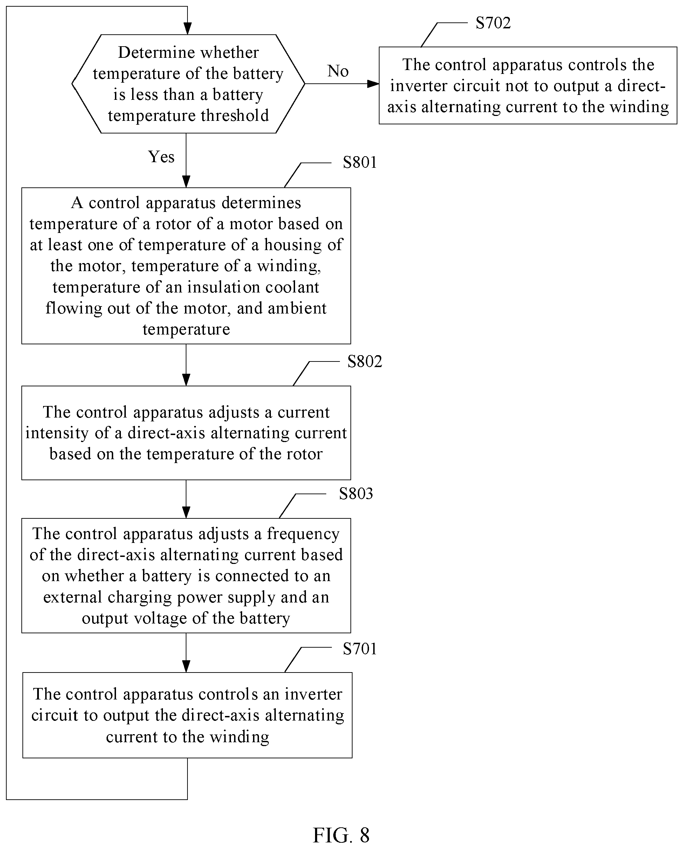

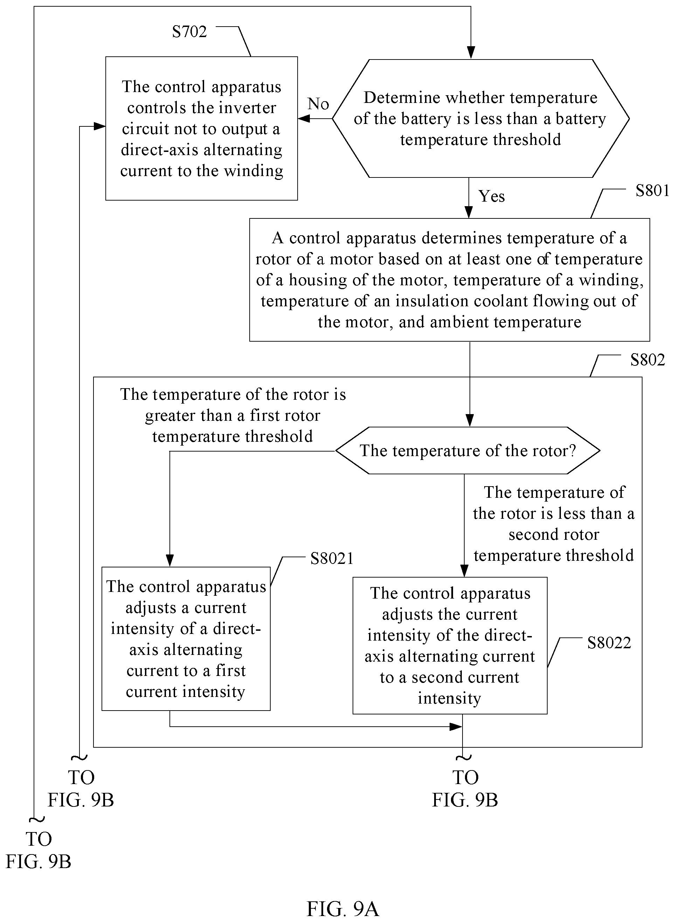

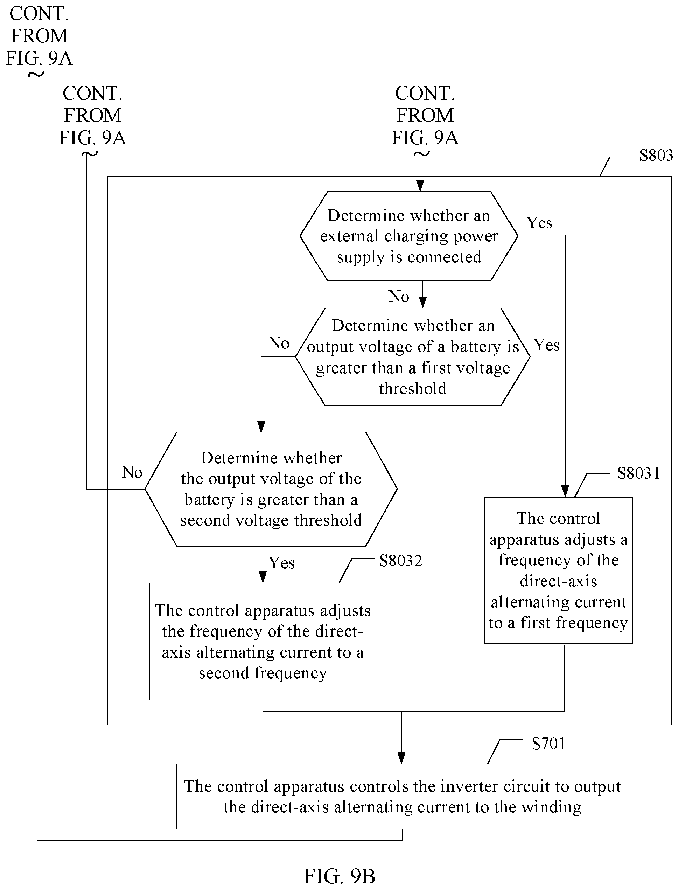

A frequency and a current intensity of the direct-axis alternating current may be fixed, or may be dynamically adjusted. If the frequency or the current intensity of the direct-axis alternating current is greater, heating power of the motor is greater, and battery heating time is shorter. If the frequency or the current intensity of the direct-axis alternating current is smaller, the heating power of the motor is smaller, and the battery heating time is longer, but it can prevent damage to the motor due to overheating. For a specific adjustment process, refer to related description in FIG. 8 and FIG. 9A and FIG. 9B.

In addition, the control apparatus may control the inverter circuit to output a quadrature-axis current to the winding, that is, the quadrature-axis current may be zero or not zero. Because the motor generates torque when the quadrature-axis current is not zero, when the electric vehicle is stationary, the quadrature-axis current may be zero in order to avoid motor vibration. When the electric vehicle is traveling, the quadrature-axis current may not be zero, so as to drive a rotating shaft of the motor to rotate and drive the electric vehicle to travel normally. In a traveling process of the electric vehicle, the motor may still generate heat through the direct-axis alternating current, so that the battery may still be heated.

S702: Otherwise, the control apparatus controls the inverter circuit not to output the direct-axis alternating current to the winding.

That is, the battery does not need to be heated to save energy of the battery. For example, in a traveling process of the vehicle, the control apparatus may control the inverter circuit to output the quadrature-axis current to the winding, and stop outputting the direct-axis alternating current to the winding, so that saved power is used to generate torque of the motor, thereby improving motor efficiency.

It should be noted that, in a battery heating process, the foregoing process may be re-performed at a specific time interval. If the temperature of the battery is greater than or equal to the battery temperature threshold, the direct-axis alternating current is not output to the winding, and battery heating is stopped.

Optionally, as shown in FIG. 8, the foregoing control method may further include steps S801 and S802 and step S803. There is no sequence of performing steps S801 and S802 and step S803.

S801: A control apparatus determines temperature of a rotor of a motor based on at least one of temperature of a housing of the motor, temperature of a winding, temperature of an insulation coolant flowing out of the motor, and ambient temperature.

In this embodiment of this application, because a rotating shaft, a rotor iron core, and a permanent magnet that generate heat are all located on the rotor, the temperature of the rotor is high, and the permanent magnet is demagnetized in high temperature. Therefore, the temperature of the rotor needs to be monitored, so as to prevent it from being excessively high. Because the rotor can rotate, it is not suitable to install a temperature sensor to directly measure its temperature. Therefore, a mapping table between the temperature of the rotor and at least one of the temperature of the housing of the motor, the temperature of the winding, the temperature of the insulation coolant flowing out of the motor, and the ambient temperature may be established in an experimental calibration manner, and the temperature of the rotor may be determined in a manner similar to checking Table 1.

**Table 1**

| Housing temperature | Winding temperature | Insulation coolant temperature | Ambient temperature | Rotor temperature |
|---|---|---|---|---|
| A1 | B1 | C1 | D1 | E1 |
| A2 | B2 | C2 | D2 | E2 |
| A3 | B3 | C3 | D3 | E3 |
| A4 | B4 | C4 | D4 | E4 |

S802: The control apparatus adjusts a current intensity of a direct-axis alternating current based on the temperature of the rotor.

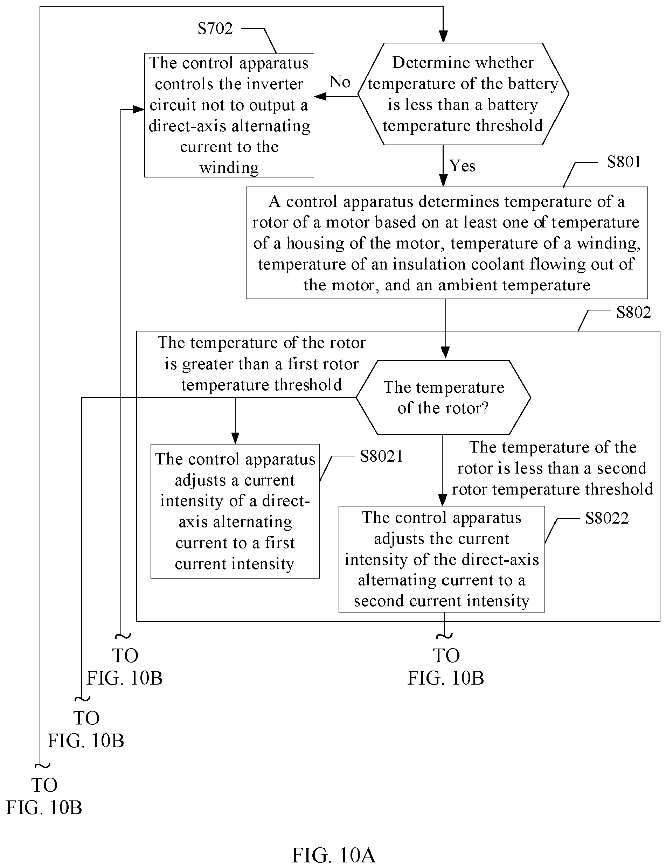

Optionally, as shown in FIG. 9A or FIG. 10A, step S802 includes:

S8021: If the temperature of the rotor is greater than a first rotor temperature threshold, the control apparatus adjusts the current intensity of the direct-axis alternating current to a first current intensity.

S8022: If the temperature of the rotor is less than a second rotor temperature threshold, the control apparatus adjusts the current intensity of the direct-axis alternating current to a second current intensity.

Otherwise, the current intensity of the direct-axis alternating current remains unchanged. That is, if the temperature of the rotor is less than or equal to the first rotor temperature threshold and is greater than or equal to the second rotor temperature threshold, the current intensity of the direct-axis alternating current remains unchanged.

The first rotor temperature threshold is greater than the second rotor temperature threshold, and the first current intensity is less than the second current intensity, that is, the first current intensity is a small current, and the second current intensity is a large current. When the temperature of the rotor is relatively high, the motor is heated with the small current, so that overheating of the motor can be prevented, and demagnetization of the permanent magnet can be avoided. When the temperature of the rotor is relatively low, the motor is heated with the large current, so that heating power can be increased, and the battery heating time is reduced.

S803: The control apparatus adjusts a frequency of the direct-axis alternating current based on whether the battery is connected to an external charging power supply and an output voltage of the battery.

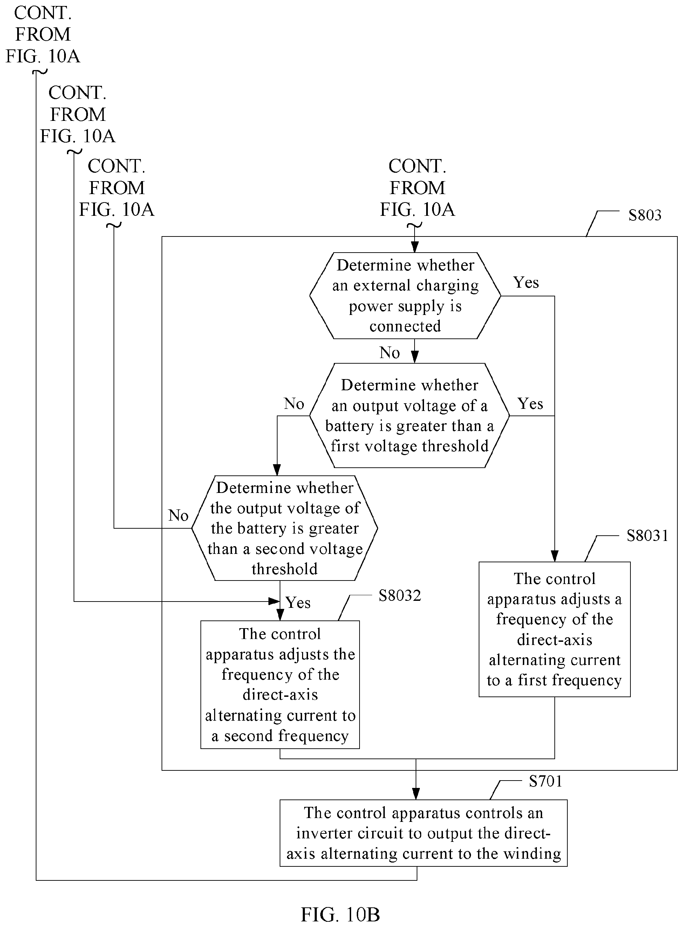

Optionally, as shown in FIG. 9B or FIG. 10B, step S803 includes S8031 and S8032.

S8031: If the battery is connected to the external charging power supply, or if the battery is not connected to the external charging power supply and the output voltage of the battery is greater than a first voltage threshold, the control apparatus adjusts the frequency of the direct-axis alternating current to a first frequency.

When the battery is connected to an external charging power supply, battery energy is not consumed, and a case in which a vehicle cannot be started normally because of low battery power is not caused. In this case, an inverter circuit may be controlled to output the direct-axis alternating current to the winding at a relatively high current intensity and/or a relatively high frequency, so as to improve motor heating efficiency and reduce battery heating time.

When the battery is not connected to the external charging power supply, in a case in which an amplitude of the direct-axis alternating current input by the motor is a specific value, an end voltage of the motor is proportional to the frequency of the input direct-axis alternating current, and a higher frequency of the direct-axis alternating current indicates a higher end voltage of the motor. When the end voltage of the motor is higher than the output voltage of the battery (that is, a bus voltage), the battery cannot supply power to the motor normally.

Therefore, when the output voltage of the battery is relatively high, the direct-axis alternating current is output to the winding at a relatively high frequency, so as to improve heating efficiency of the motor and reduce battery heating time.

S8032: If the battery is not connected to the external charging power supply and the output voltage of the battery is less than or equal to the first voltage threshold but is greater than the second voltage threshold, the control apparatus adjusts the frequency of the direct-axis alternating current to a second frequency.

The first voltage threshold is greater than the second voltage threshold, and the first frequency is greater than the second frequency, that is, the first frequency is a high frequency, and the second frequency is a low frequency.

As described in step S8031, when the output voltage of the battery is low, the direct-axis alternating current may be output to the winding at a relatively low frequency, so as to prevent a case in which the battery cannot supply power to the motor due to excessively high end voltage of the motor.

In addition, if the battery is not connected to the external charging power supply and the output voltage of the battery is less than or equal to the second voltage threshold, step S702 is performed. In this case, the battery power is excessively low, and the battery cannot be heated through motor heating.

It should be noted that, as shown in FIG. 9A and FIG. 9B, in a possible implementation, a current intensity and a frequency of a direct-axis alternating current may be independently controlled.

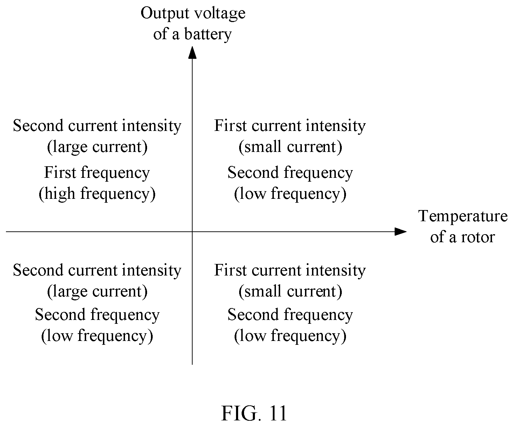

As shown in FIG. 10A and FIG. 10B, in another possible implementation, the current intensity and the frequency of the direct-axis alternating current are both controlled based on the temperature of the rotor, that is, if the temperature of the rotor is greater than the first rotor temperature threshold, step S8021 and step S8032 are performed. A coordinate system is established according to temperature of a rotor and an output voltage of a battery, and a relationship between a current intensity and a frequency of a direct-axis alternating current is shown in FIG. 11.

According to the motor, the motor controller, the heat exchange system, and the control method provided in embodiments of this application, a direct-axis alternating current is input into the winding of the motor, the rotating shaft of the rotor, the rotor iron core and the stator generate heat due to an eddy current loss and a magnetic hysteresis loss, the permanent magnet of the rotor generates heat due to an eddy current loss, and the winding generates heat due to a copper loss. Therefore, compared with simply relying on the copper loss of the winding to generate heat, this application can provide higher heating power and heating efficiency, and speed up a heating speed.

A disclosure further provides a computer-readable storage medium. The computer-readable storage medium stores a computer program, and when the computer program runs on a computer or a processor, the control methods in FIG. 7 to FIG. 10B are performed.

A disclosure of this application further provides a computer program product that includes instructions. When the instructions are run on a computer or a processor, the control methods in FIG. 7 to FIG. 10B are executed.

A disclosure of this application provides a chip system, and the chip system includes a processor, which is configured to execute the control methods in FIG. 7 to FIG. 10B by a motor controller.

In a possible design, the chip system further includes a memory, and the memory is configured to store necessary program instructions and necessary data. The chip system may include a chip and an integrated circuit, or may include a chip and another discrete device. This is not specifically limited in this embodiment of this application.

The computer-readable storage medium, the computer program product, or the chip system provided in this application is configured to perform the foregoing method. Therefore, for beneficial effects that can be achieved, refer to the beneficial effects in the foregoing implementations. Details are not described herein again.

The processor in this disclosure may be a chip. For example, the processor may be a field programmable gate array (field programmable gate array, FPGA), an application-specific integrated chip (application specific integrated circuit, ASIC), a system on chip (system on chip, SoC), a central processing unit (central processor unit, CPU), a network processor (network processor, NP), a digital signal processing circuit (digital signal processor, DSP), a micro controller unit (micro controller unit, MCU), a programmable controller (programmable logic device, PLD), or another integrated chip.

The memory in this disclosure may be a volatile memory or a non-volatile memory, or may include both a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM) that is used as an external buffer. By way of example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that the memories in the systems and methods described in this specification include but are not limited to these memories and any memory of another suitable type.

It should be understood that sequence numbers of the foregoing processes do not mean execution sequences. The execution sequences of the processes should be determined based on functions and internal logic of the processes, and should not constitute any limitation to implementation processes of embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraints of the technical solutions. A person skilled in the art may use different methods to implement the described functions for each particular application.

It may be clearly understood by a person skilled in the art that, for the purpose of convenient and brief description, for a detailed working process of the foregoing system, apparatus, and unit, refer to a corresponding process in the foregoing method description. Details are not described herein again.

The protection scope of this application shall be subject to the protection scope of the claims.

## Claims

1. A system comprising a motor (33) in communication with a motor controller (32), the motor (33) comprising a housing (331), a stator (332) mounted inside the housing (331), a rotor (333) connected to the housing (331) through a bearing, a winding (334) wound on the stator (332), and a liquid inlet hole (336) and a liquid outlet hole (337) that are connected to a cavity (335) in the housing (331), wherein the liquid inlet hole (336) is used for inflow of an insulation coolant, and the liquid outlet hole (337) is used for outflow of the insulation coolant;
the rotor (333) comprises a rotating shaft (3331), a rotor iron core (3332) mounted around the rotating shaft (3331), and a permanent magnet mounted on the rotor iron core (3332);
a first hole channel (H1) connected to the cavity (335) is disposed on the rotor iron core (3332);
a second hole channel (H2) connected to the cavity (335) is disposed on the rotating shaft (3331);
wherein the liquid inlet hole (336) comprises a first liquid inlet hole, and the first liquid inlet hole is disposed on the rotating shaft (3331), and is connected to the second hole channel (H2), so that the insulation coolant can flow into the motor through the rotating shaft (3331);
wherein a third hole channel (H3) is further disposed between the rotating shaft (3331) and the rotor iron core (3332), and the first hole channel (H1) is connected to the second hole channel (H2) through the third hole channel (H3);
wherein a fourth hole channel connected to the cavity (335) is disposed on the stator (332), wherein insulation coolant flowing in the fourth hole channel (H4) is used to perform heat exchange with the stator (332); and
the winding (334) is configured to input a direct-axis alternating current;
wherein the motor controller (32) comprises an inverter circuit (322) and a control apparatus (321), wherein the control apparatus (321) is configured, in use, to control the inverter circuit (322) to output a direct-axis alternating current to the winding (334) if the temperature of a battery (31) is less than a battery temperature threshold, otherwise the control apparatus (321) controls the inverter circuit (322) not to output the direct-axis alternating current to the winding (334);
wherein the control apparatus (321) is further configured to:
if temperature of the battery (32) is less than a battery temperature threshold, adjust a frequency of the direct-axis alternating current based on whether the battery (32) is connected to an external charging power supply and an output voltage of the battery (32); wherein:
if the battery (31) is connected to an external charging power supply, or if the battery (31) is not connected to an external charging power supply and the output voltage of the battery (31) is greater than a first voltage threshold, adjust the frequency of the direct-axis alternating current to a first frequency; or
if the battery (31) is not connected to an external charging power supply and the output voltage of the battery (31) is less than or equal to the first voltage threshold but is greater than a second voltage threshold, adjust the frequency of the direct-axis alternating current to a second frequency;
wherein the first voltage threshold is greater than the second voltage threshold, a first current intensity is greater than a second current intensity, and the first frequency is greater than the second frequency.

2. The system according to claim 1, wherein the liquid inlet hole (336) comprises a second liquid inlet hole, and the second liquid inlet hole is disposed at a position that is on the top of the housing (331) and faces the winding (334).

3. The system according to claim 1 or claim 2, wherein the liquid outlet hole (337) is disposed at the bottom of the housing (331).

4. The system according to any preceding claim, wherein the control apparatus (321) is further configured to:
if the temperature of the battery (31) is less than the battery temperature threshold, determine temperature of a rotor (333) of the motor (33) based on at least one of temperature of a housing (331) of the motor (33), temperature of the winding (334), temperature of an insulation coolant flowing out of the motor (33), and ambient temperature; and
adjust a current intensity of the direct-axis alternating current based on the temperature of the rotor (333).

5. The system according to claim 4, wherein the control apparatus (321) is specifically configured to:
if the temperature of the rotor (333) is greater than a first rotor temperature threshold, adjust the current intensity of the direct-axis alternating current to the first current intensity;
if the temperature of the rotor (333) is less than a second rotor temperature threshold, adjust the current intensity of the direct-axis alternating current to the second current intensity; or
if the temperature of the rotor (333) is less than or equal to the first rotor temperature threshold and is greater than or equal to the second rotor temperature threshold, maintain the current intensity of the direct-axis alternating current, wherein
the first rotor temperature threshold is greater than the second rotor temperature threshold, and the first current intensity is less than the second current intensity.

6. The system according to claim 5, wherein the control apparatus (321) is further configured to:
if the temperature of the rotor (333) is greater than the first rotor temperature threshold, adjust the frequency of the direct-axis alternating current to the second frequency.

7. The system according to any preceding claim, wherein the control apparatus (321) is further configured to:
output a quadrature-axis current to the winding (334).

8. A heat exchange system, comprising the system according to any preceding claim, a heat exchanger (34), and a liquid pump (35), wherein
the liquid pump (35), the heat exchanger (34), and a liquid outlet hole (337) and a liquid inlet hole (336) of the motor (33) are connected, and are configured to flow an insulation coolant; and
the motor controller (32) is configured to output a direct-axis alternating current to a winding (334) of the motor (33), and is further configured to control operation of the liquid pump (35).

## Patentansprüche

1. System, umfassend einen Motor (33) in Kommunikation mit einem Motorsteuergerät (32), wobei der Motor (33) ein Gehäuse (331), einen Stator (332), der innerhalb des Gehäuses (331) montiert ist, einen Rotor (333), der über ein Lager mit dem Gehäuse (331) verbunden ist, eine Wicklung (334), die auf dem Stator (332) gewickelt ist, und ein Flüssigkeitseinlassloch (336) und ein Flüssigkeitsauslassloch (337) umfasst, die mit einem Hohlraum (335) in dem Gehäuse (331) verbunden sind, wobei das Flüssigkeitseinlassloch (336) zum Einfließen eines Isolierkühlmittels verwendet wird und das Flüssigkeitsauslassloch (337) zum Ausfließen des Isolierkühlmittels verwendet wird;
der Rotor (333) eine Drehwelle (3331), einen Rotoreisenkern (3332), der um die Drehwelle (3331) herum montiert ist, und einen Dauermagneten, der um den Rotoreisenkern (3332) herum montiert ist, umfasst;
ein erster Lochkanal (H1), der mit dem Hohlraum (335) verbunden ist, auf dem Rotoreisenkern (3332) angeordnet ist;
ein zweiter Lochkanal (H2), der mit dem Hohlraum (335) verbunden ist, auf der Drehwelle (3331) angeordnet ist;
wobei das Flüssigkeitseinlassloch (336) ein erstes Flüssigkeitseinlassloch umfasst und das erste Flüssigkeitseinlassloch auf der Drehwelle (3331) angeordnet ist und mit dem zweiten Lochkanal (H2) verbunden ist, sodass das Isolierkühlmittel durch die Drehwelle (3331) hindurch in den Motor fließen kann;
wobei ein dritter Lochkanal (H3) ferner zwischen der Drehwelle (3331) und dem Rotoreisenkern (3332) angeordnet ist und der erste Lochkanal (H1) über den dritten Lochkanal (H3) mit dem zweiten Lochkanal (H2) verbunden ist;
wobei ein vierter Lochkanal, der mit dem Hohlraum (335) verbunden ist, auf dem Stator (332) angeordnet ist, wobei Isolierkühlmittel, das in dem vierten Lochkanal (H4) fließt, dazu verwendet wird, einen Wärmeaustausch mit dem Stator (332) durchzuführen; und
die Wicklung (334) dazu konfiguriert ist, einen Direktachsenwechselstrom einzugeben;
wobei das Motorsteuergerät (32) einen Wechselrichterkreis (322) und eine Steuervorrichtung (321) umfasst, wobei die Steuervorrichtung (321) dazu konfiguriert ist, bei Verwendung den Wechselrichterkreis (322) zu steuern, um einen Direktachsenwechselstrom an die Wicklung (334) auszugeben, falls die Temperatur einer Batterie (31) kleiner als ein Batterietemperaturschwellenwert ist, und andernfalls die Steuervorrichtung (321) den Wechselrichterkreis (322) steuert, um den Direktachsenwechselstrom nicht an die Wicklung (334) auszugeben;
wobei die Steuervorrichtung (321) ferner zu Folgendem konfiguriert ist:
falls die Temperatur der Batterie (32) kleiner als ein Batterietemperaturschwellenwert ist, Einstellen einer Frequenz des Direktachsenwechselstroms basierend darauf, ob die Batterie (32) mit einer externen Ladeleistungsversorgung verbunden ist, und einer Ausgabespannung der Batterie (32); wobei:
falls die Batterie (31) mit einer externen Ladeleistungsversorgung verbunden ist oder falls die Batterie (31) nicht mit einer externen Ladeleistungsversorgung verbunden ist und die Ausgabespannung der Batterie (31) größer als ein erster Spannungsschwellenwert ist, Einstellen der Frequenz des Direktachsenwechselstroms auf eine erste Frequenz; oder
falls die Batterie (31) nicht mit einer externen Ladeleistungsversorgung verbunden ist und die Ausgabespannung der Batterie (31) kleiner als oder gleich dem ersten Spannungsschwellenwert ist, jedoch größer als ein zweiter Spannungsschwellenwert ist, Einstellen der Frequenz des Direktachsenwechselstroms auf eine zweite Frequenz;
wobei der erste Spannungsschwellenwert größer als der zweite Spannungsschwellenwert ist, eine erste Stromstärke größer als eine zweite Stromstärke ist und die erste Frequenz größer als die zweite Frequenz ist.

2. System nach Anspruch 1, wobei das Flüssigkeitseinlassloch (336) ein zweites Flüssigkeitseinlassloch umfasst und das zweite Flüssigkeitseinlassloch an einer Position angeordnet ist, die sich oben auf dem Gehäuse (331) befindet und der Wicklung (334) zugewandt ist.

3. System nach Anspruch 1 oder Anspruch 2, wobei das Flüssigkeitsauslassloch (337) unten an dem Gehäuse (331) angeordnet ist.

4. System nach einem der vorhergehenden Ansprüche, wobei die Steuervorrichtung (321) ferner zu Folgendem konfiguriert ist:
falls die Temperatur der Batterie (31) kleiner als der Batterietemperaturschwellenwert ist, Bestimmen einer Temperatur eines Rotors (333) des Motors (33) basierend auf mindestens einer von einer Temperatur eines Gehäuses (331) des Motors (33), einer Temperatur der Wicklung (334), einer Temperatur eines Isolierkühlmittels, das aus dem Motor (33) fließt, und einer Umgebungstemperatur; und
Einstellen einer Stromstärke des Direktachsenwechselstroms basierend auf der Temperatur des Rotors (333).

5. System nach Anspruch 4, wobei die Steuervorrichtung (321) speziell zu Folgendem konfiguriert ist:
falls die Temperatur des Rotors (333) größer als ein erster Rotortemperaturschwellenwert ist, Einstellen der Stromstärke des Direktachsenwechselstroms auf die erste Stromstärke;
falls die Temperatur des Rotors (333) kleiner als ein zweiter Rotortemperaturschwellenwert ist, Einstellen der Stromstärke des Direktachsenwechselstroms auf die zweite Stromstärke; oder falls die Temperatur des Rotors (333) kleiner als oder gleich dem ersten Rotortemperaturschwellenwert ist und größer als oder gleich dem zweiten Rotortemperaturschwellenwert ist, Aufrechterhalten der Stromstärke des Direktachsenwechselstroms, wobei
der erste Rotortemperaturschwellenwert größer als der zweite Rotortemperaturschwellenwert ist und die erste Stromstärke kleiner als die zweite Stromstärke ist.

6. System nach Anspruch 5, wobei die Steuervorrichtung (321) ferner zu Folgendem konfiguriert ist:
falls die Temperatur des Rotors (333) größer als der erste Rotortemperaturschwellenwert ist, Einstellen der Frequenz des Direktachsenwechselstroms auf die zweite Frequenz.

7. System nach einem der vorhergehenden Ansprüche, wobei die Steuervorrichtung (321) ferner zu Folgendem konfiguriert ist: Ausgeben eines Quadraturachsenstroms an die Wicklung (334).

8. Wärmetauschersystem, umfassend das System nach einem der vorhergehenden Ansprüche, einen Wärmetauscher (34) und eine Flüssigkeitspumpe (35), wobei
die Flüssigkeitspumpe (35), der Wärmetauscher (34) und ein Flüssigkeitsauslassloch (337) und ein Flüssigkeitseinlassloch (336) des Motors (33) verbunden sind und dazu konfiguriert sind, ein Isolierkühlmittel fließen zu lassen; und
das Motorsteuergerät (32) dazu konfiguriert ist, einen Direktachsenwechselstrom an eine Wicklung (334) des Motors (33) auszugeben, und ferner dazu konfiguriert ist, einen Betrieb der Flüssigkeitspumpe (35) zu steuern.

## Revendications

1. Système comprenant un moteur (33) en communication avec un dispositif de commande de moteur (32), le moteur (33) comprenant un boîtier (331), un stator (332) monté à l'intérieur du boîtier (331), un rotor (333) relié au boîtier (331) par un palier, un enroulement (334) enroulé sur le stator (332), et un orifice d'entrée de liquide (336) et un orifice de sortie de liquide (337) reliés à une cavité (335) dans le boîtier (331), dans lequel l'orifice d'entrée de liquide (336) est utilisé pour l'entrée d'un fluide de refroidissement isolant, et l'orifice de sortie de liquide (337) est utilisé pour l'évacuation du fluide de refroidissement isolant ;
le rotor (333) comprend un arbre rotatif (3331), un noyau de fer de rotor (3332) monté autour de l'arbre rotatif (3331) et un aimant permanent monté sur le noyau de fer de rotor (3332) ; un premier canal de trou (H1) relié à la cavité (335) est disposé sur le noyau de fer de rotor (3332) ;
un deuxième canal de trou (H2) relié à la cavité (335) est disposé sur l'arbre rotatif (3331) ;
dans lequel l'orifice d'entrée de liquide (336) comprend un premier orifice d'entrée de liquide, et le premier orifice d'entrée de liquide est disposé sur l'arbre rotatif (3331) et est relié au deuxième canal de trou (H2), de sorte que le liquide de refroidissement isolant puisse s'écouler dans le moteur par le biais de l'arbre rotatif (3331) ;
dans lequel un troisième canal de trou (H3) est disposé également entre l'arbre rotatif (3331) et le noyau de fer de rotor (3332), et le premier canal de trou (H1) est relié au deuxième canal de trou (H2) par l'intermédiaire du troisième canal de trou (H3) ; dans lequel un quatrième canal de trou relié à la cavité (335) est disposé sur le stator (332), dans lequel le fluide de refroidissement isolant circulant dans le quatrième canal de trou (H4) est utilisé pour réaliser un échange de chaleur avec le stator (332) ; et
l'enroulement (334) est configuré pour entrer un courant alternatif à axe direct ;
dans lequel le dispositif de commande de moteur (32) comprend un circuit onduleur (322) et un appareil de commande (321), dans lequel l'appareil de commande (321) est configuré, en utilisation, pour commander le circuit onduleur (322) afin de fournir un courant alternatif à axe direct à l'enroulement (334) si la température d'une batterie (31) est inférieure à un seuil de température de batterie, sinon l'appareil de commande (321) commande le circuit onduleur (322) pour qu'il ne fournisse pas le courant alternatif à axe direct à l'enroulement (334) ; dans lequel l'appareil de commande (321) est également configuré pour :
si la température de la batterie (32) est inférieure à un seuil de température de batterie, ajuster une fréquence du courant alternatif à axe direct sur la base de la connexion de la batterie (32) à une alimentation de charge externe et de la tension de sortie de la batterie (32) ; dans lequel :
si la batterie (31) est connectée à une alimentation de charge externe, ou si la batterie (31) n'est pas connectée à une alimentation de charge externe et que la tension de sortie de la batterie (31) est supérieure à un premier seuil de tension, ajuster la fréquence du courant alternatif à axe direct à une première fréquence ; ou
si la batterie (31) n'est pas connectée à une alimentation de charge externe et que la tension de sortie de la batterie (31) est inférieure ou égale au premier seuil de tension mais supérieure à un second seuil de tension, ajuster la fréquence du courant alternatif à axe direct à une seconde fréquence ;
dans lequel le premier seuil de tension est supérieur au second seuil de tension, une première intensité de courant est supérieure à une seconde intensité de courant et la première fréquence est supérieure à la seconde fréquence.

2. Système selon la revendication 1, dans lequel l'orifice d'entrée de liquide (336) comprend un second orifice d'entrée de liquide, et le second orifice d'entrée de liquide est disposé à une position qui se trouve sur le dessus du boîtier (331) et fait face à l'enroulement (334).

3. Système selon la revendication 1 ou la revendication 2, dans lequel l'orifice de sortie de liquide (337) est disposé au fond du boîtier (331).

4. Système selon une quelconque revendication précédente, dans lequel l'appareil de commande (321) est également configuré pour :
si la température de la batterie (31) est inférieure au seuil de température de la batterie, déterminer la température d'un rotor (333) du moteur (33) sur la base d'au moins l'une de la température d'un boîtier (331) du moteur (33), de la température de l'enroulement (334), de la température du liquide de refroidissement isolant s'écoulant du moteur (33) et de la température ambiante ; et
ajuster une intensité de courant alternatif à axe direct sur la base de la température du rotor (333).

5. Système selon la revendication 4, dans lequel l'appareil de commande (321) est spécifiquement configuré pour :
si la température du rotor (333) est supérieure à un premier seuil de température du rotor, ajuster l'intensité de courant alternatif à axe direct à la première intensité de courant ;
si la température du rotor (333) est inférieure à un second seuil de température du rotor, ajuster l'intensité de courant alternatif à axe direct à la seconde intensité de courant ; ou
si la température du rotor (333) est inférieure ou égale au premier seuil de température du rotor et supérieure ou égale au second seuil de température du rotor, maintenir l'intensité de courant alternatif à axe direct, dans lequel
le premier seuil de température du rotor est supérieur au second seuil de température du rotor, et la première intensité de courant est inférieure à la seconde intensité de courant.

6. Système selon la revendication 5, dans lequel l'appareil de commande (321) est également configuré pour :
si la température du rotor (333) est supérieure au premier seuil de température du rotor, ajuster la fréquence du courant alternatif à axe direct à la seconde fréquence.

7. Système selon une quelconque revendication précédente, dans lequel l'appareil de commande (321) est également configuré pour :
délivrer en sortie un courant en quadrature sur l'enroulement (334).

8. Système d'échange de chaleur, comprenant le système selon une quelconque revendication précédente, un échangeur de chaleur (34) et une pompe à liquide (35), dans lequel
la pompe à liquide (35), l'échangeur de chaleur (34), un orifice de sortie de liquide (337) et un orifice d'entrée de liquide (336) du moteur (33) sont connectés et configurés pour faire circuler un fluide de refroidissement isolant ; et
le dispositif de commande de moteur (32) est configuré pour délivrer en sortie un courant alternatif à axe direct à un enroulement (334) du moteur (33), et est également configuré pour commander le fonctionnement de la pompe à liquide (35).
